# EUROPEAN PATENT APPLICATION

(11) **EP 1 154 639 A1**
(43) Date of publication of application: **14.11.2001**
(21) Application number: 01300148.2
(22) Date of filing: 09.01.2001
(51) Int. Cl.: H04N 5/225, G02B 6/28, H04N 3/10

(54) **A method and system for multi-pixel imaging**

(30) Priority: 09.05.2000 IL 13603600
(71) Applicant: ELOP ELECTRO-OPTICS INDUSTRIES LTD., Rehovot 76111 (IL)
(72) Inventor: Almi, Lucien, Rehovot 76301 (IL)
(74) Representative: Pratt, David Martin

(57) **Abstract**

A method is described for multi-pixel imaging of a scene, using a single detector (6) associated with a time-delay arrangement. The method comprises the steps of producing an image of at least part of a remote scene in a defined image plane, receiving that scene as imaged on the image plane and conveying it image pixel by image pixel through a plurality of light-conveying means (4) to the single detector (6) while introducing a time-delay, whereby the image pixels arrive at the single detector in a sequential order, and using an electronic logic (8) to reconstruct the image from the time-delayed image pixels received by the detector.

## Description

### Field of the Invention

The present invention relates to a method and a system for multi-pixel imaging, using a single detector associated with a time-delay arrangement.

### Background of the Invention

As far as passive, two-dimensional imaging is concerned, especially in the visible region of the spectrum, present-day technology has provided a satisfactory answer in the form of various detector arrays and matrices, such as, e.g., CCD devices. The problem becomes more complex when the scene to be imaged requires active illumination. Some of the known devices use the direct scanning solution, in which the illuminator beam is passed through a scanning device and impinges upon the scene. The reflected light, after being steered by the same scanner, produces an image on a detector. The moving parts and the required synchronization constitute serious drawbacks.

At the other end of the spectrum of imaging devices is the detector array. The light source illuminates the entire scene, which is "seen" in full by an array of detectors.

The practical value of these solutions depends on various parameters, associated partly with the device itself and partly with the scene and the atmospheric conditions, in conjunction with the demands of the overall system. Sometimes a hybrid solution is indicated, in which a detector array having a partial field of view only, and an accordingly shaped illuminator beam, partially scan the scene. Such complex solutions should be selected when three-dimensional profiling imaging is required, especially in the infrared region of the spectrum, and more particularly when eye-safe illumination is to be used.

Three-dimensional profiling imaging is today being intensively investigated by numerous organizations and companies, because of the need for compact, low-cost imagers able to produce a three-dimensional image of a scene and to automatically identify targets in spite of continuously changing light conditions and aspect angles of both scene and targets.

The heart of advanced, modern, non-eye-safe three-dimensional imagers is the high-powered laser, illuminating the scene or part of it, and an array of avalanche photodiodes (APDs) with the associated range-measuring and image-creating electronics. The most serious disadvantage of these devices is the demand for arrays of detectors that must be both sensitive and have a very rapid response to the short pulses of the laser illuminators.

It is these illuminators and the corresponding detectors that are used in military range finders. The light radiated is not eye-safe and the APD detectors with their range-imaging electronics are very complex and expensive, in comparison with the conventional detector arrays used in video cameras.

Lately, due to the growing demand for eye-safe devices and due to the latest developments and availability of solid-state, eye-safe laser illuminators, a similar demand is felt for appropriate APD detector arrays for eye-safe, three-dimensional profiling imaging. This means a low-cost array, or at least a sub-array, of APDs, sensitive to the wavelength of eye-safe laser light (1.5 to 1.6 µm). Until recently, no such array has been available. Detectors to be used with laser range finders operating at such a wavelength are too difficult to produce as multi-element arrays. Despite efforts reported in the literature, so far only partial success has been achieved in developing a prototype of such an APD having a quasi-array of a few elements, which suffers from enormous electronic complexity and is very expensive, making it impractical for world market demands.

### Disclosure of the Invention

It is thus an object of the present invention to provide a method for creating a multi-pixel image of at least part of a scene, using only a single detector.

According to the present invention, the above object is achieved by providing a method for multi-pixel imaging of a scene, using a single detector associated with a time-delay arrangement, said method comprising the steps of producing an image of at least part of a remote scene in a defined image plane, receiving said scene as imaged on said image plane and conveying it image pixel by image pixel through a plurality of light-conveying means to a single detector while introducing a time-delay, whereby said image pixels arrive at said single detector in a sequential order, and using an electronic logic to reconstruct said image from said time-delayed image pixels received by said detector.

It is a further object of the present invention to provide a system for creating a multi-pixel image of at least part of a scene, using a single detector only.

According to the invention, the above object is achieved by providing a system for multi-pixel imaging of a scene, using a single detector associated with a time-delay arrangement, said system comprising imaging means to create an image of a remote scene in a defined image plane, image-conveying means receiving said image pixel-by-pixel from said image plane, each of said image-conveying means constituting an optical path of different length, introducing time delays; a single detector for detecting the light pulses produced by said image pixels in a sequential order produced by said time delays, and an electronic logic fed by said single detector to reconstruct said image.

### Brief Description of the Drawings

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1 is a block diagram of the system according to the present invention;
Fig. 2 is an enlarged, more detailed, schematic view of the fiber/detector unit of the system of Fig. 1;
Fig. 3 represents a two-dimensional scanning configuration;
Fig. 4 shows a one-dimensional scanning configuration;
Fig. 5 shows a non-scanning, staring configuration;
Fig. 6 depicts an example of a combined fiber architecture;
Fig. 7 illustrates a practical, compact version of the architecture of Fig. 6;
Fig. 8 shows the use of a sub-bundle of fibers;
Fig. 9 illustrates the use of a sub-bundle of fibers for use with a light-intensity detector;
Fig. 10 illustrates the use of a mediator arrangement;
Fig. 11 shows a first method of coupling a relatively narrow fiber to a much larger detector;
Fig. 12 illustrates a mediator arrangement for the same purpose as shown in Fig. 11, and
Fig. 13 is a detailed block diagram of the electronics associated with the single detector.

### Detailed Description of Preferred Embodiments

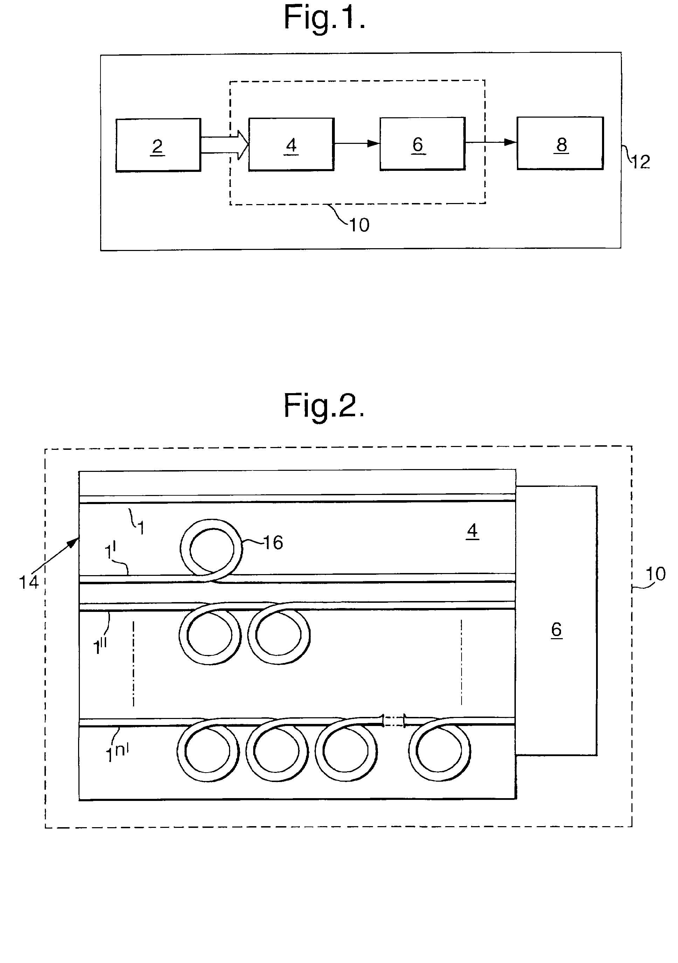

Referring now to the drawings, there is seen in Fig. 1 a block diagram of the system of the present invention, comprising imaging means such as, e.g., a lens 2, a bundle of optical fibers 4, a single detector 6 and signal addressing logic 8. The fiber/detector sub-unit is denoted by numeral 10, and the entire system by numeral 12.

Fig. 2 is an enlarged representation of sub-unit 10 of Fig. 1 and illustrates the working principle of the invention, according to which the whole array of detectors required by conventional range imagers is replaced by a single detector.

It is assumed that the illuminator (not shown) of, e.g., a range imager, illuminates the scene by appropriate pulses of light and that a multi-pixel image of the scene is produced by imaging means (Fig. 1) in the imaging plane 14 in which the front end of fiber bundle 4 is located, that collects the echoes of the illuminator light from the various parts of the scene and conveys it to detector 6. The stratagem, provided by the invention, whereby each image pixel of an instantaneous, multi-pixel image is channeled into a single detector while still retaining its individuality, is clearly perceived from Fig. 2 and consists in introducing a time delay between the arrival at the single detector of each of the fiber-transmitted image pixels. This is realized by providing each of the fibers of bundle 4 with a different optical path length, i.e., a different physical length, as clearly seen in Fig. 2. There is shown a fiber bundle 4 having *n* fibers extending between image plane 14 and the single detector 6. It is seen that each fiber 1 is longer than its neighbor by a length symbolized by loop 16 and predetermined in accordance with the pixel position and the signal addressing logic 8 of system 12. Given the limited range imager space available and weight permissible on the one hand, and the velocity of light on the other, it is obvious that these delays are of an order of magnitude of nanoseconds, but are still within the power of resolution of range imager logic 8.

In this way, the sequential, time-ordered electronic pulses outputting from the single detector 6 and fed to the signal addressing logic 8 will each carry its own pixel range and artificially added time-delay address, to be individually recognized and processed by the signal addressing logic 8.

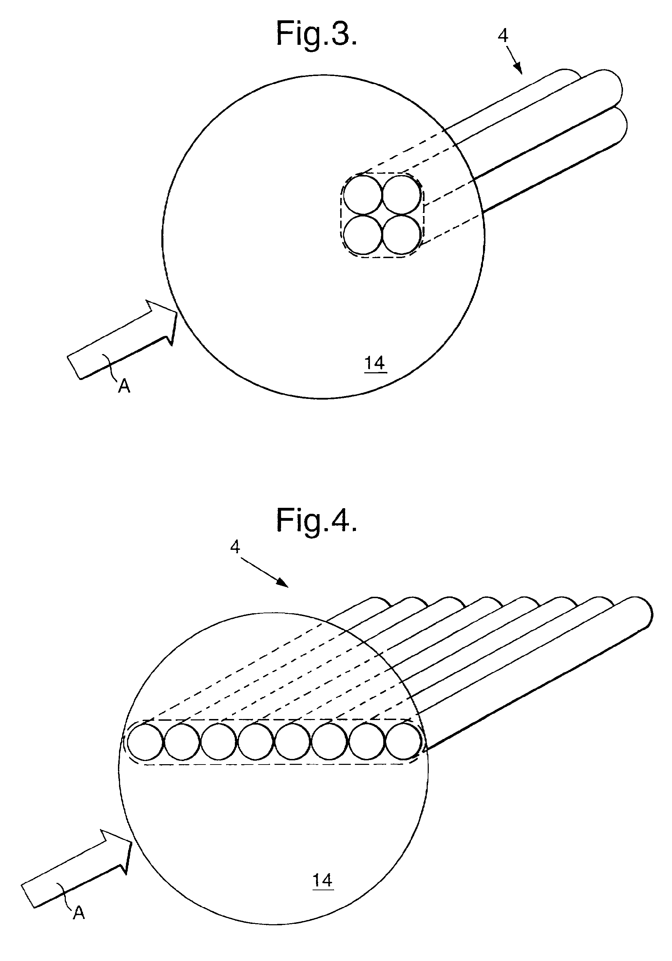

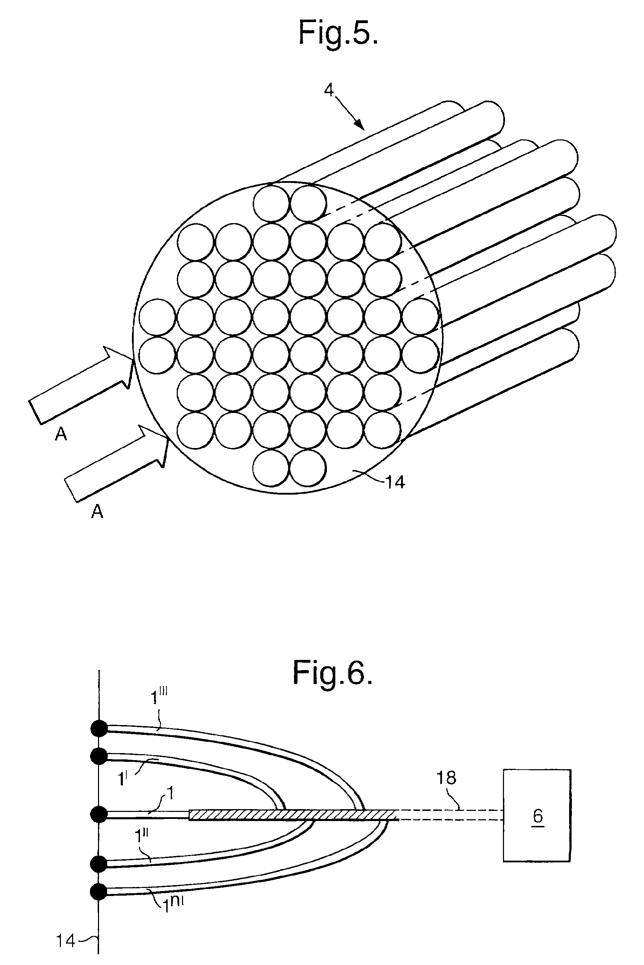

The present invention allows for several fiber bundle configurations, depending on the light distribution created in image plane 14, which in turn is defined by the overall illuminator-detection system chosen. In principle, there are three configurations available: a configuration requiring two-dimensional scanning (Fig. 3), a configuration allowing one-dimensional scanning (Fig. 4) and a non-scanning configuration (Fig. 5).

The two-dimensional scanning configuration of Fig. 4 shows a bundle 4 of, in this example, four fibers, the ends of which are located in image plane 14 and over which the image is scanned by any of the *per se* known two-dimensional scanners. In conformity with the above-given explanations concerning the time-delay principle, each one of the four fibers is of a different length. Arrow *A* indicates the light from the imaging optics 2 (Fig. 1).

A one-dimensional scanning configuration is shown in Fig. 4. Here, bundle 4 (at its image plane end) is flat, and of a linear extent that covers the largest horizontal dimension of image plane 14, in this case, its diameter. In this embodiment, too, the fibers of flat bundle 4 are each of a different length. It will be appreciated that while the image-side end of bundle 4 must be flat, the rest of its length may assume any shape. The shape of the detector-side end will be discussed further below. The advantage of this configuration is the reduced complexity of the required scanning mechanism.

Fig. 5 illustrates a non-scanning, so-called staring configuration, in which bundle 4 is of such a size as to fill the entire image plane 14. The fact that this configuration requires no scanning at all is a definite advantage. On the other hand, the total weight, length and bulkiness of such a bundle might present difficulties for some applications, for which possible solutions will be proposed further below.

An additional parameter influencing the fiber bundle configuration is the filling factor of the image-to-fiber transfer. While it is most convenient to provide one fiber for each image pixel in image plane 14, the circular cross-section of commercially available fibers, when packed to form a bundle, produces blind spots between adjacent fibers. With fibers of a diameter of, e.g., 100 µm, the extent of these blind spots is liable to become significant, inasmuch as important information may be missed. In such cases, it is advantageous to use a number (*n*²) of fibers of a small diameter (e.g., 10 µm), to jointly collect the image previously collected by a single, 100 µm diameter fiber, resulting in a pronounced reduction of the blind spot areas. Depending on the fiber architecture selected (see below), the *n*² fibers may be directly coupled to detector 6, or may be merged into a single, larger fiber before reaching detector 6.

The term "fiber bundle architecture" refers, in general, to the way the light is conveyed from the image plane to the detector, using a bundle of fibers. In direct architecture, one end of each fiber is located in image plane 14, the other end being coupled to detector 6. This architecture is convenient when the number of pixels, multiplied by the diameter of the fiber, is close to the detector diameter, thus ensuring that most of the detector surface will be illuminated. As an example, when 10 fibers are needed, each of a diameter of 100 µm, and the detector diameter is 1.5 to 2 mm, the direct architecture will be a good choice.

The combined architecture is used when the number of needed fibers is large and/or when there are severe restrictions on the volume and weight of the detection system. It should be kept in mind that, due to the increasing length of the fibers (one with respect to the other) in the bundle, the total length and weight, in the direct architecture, may be too great. The combined architecture resolves this problem in a very elegant way: the fibers used in imaging plane 14 are chosen to be of small diameter (for example, 10 µm). Some distance way from the image plane, the fibers are inserted into a main, thick fiber (in this example, 300 µm), each fiber at a different distance, to produce a different optical path for each fiber, as required by the invention. In such a configuration, the total fiber length is mainly the length of the main, thick fiber, which is much less than the total lengths of all the fibers used in the direct architecture. When necessary matching between the main fiber diameters and the detector diameter requires a thicker main fiber, several main fibers may be used, with only a part of the image-plane fibers entering each main fiber, or a thicker main fiber may be used. Schematically, this architecture is seen in Fig. 6, showing image plane 14, detector 6, main fiber 18 and thin image-plane fibers 1 to 1^{*n'*}.

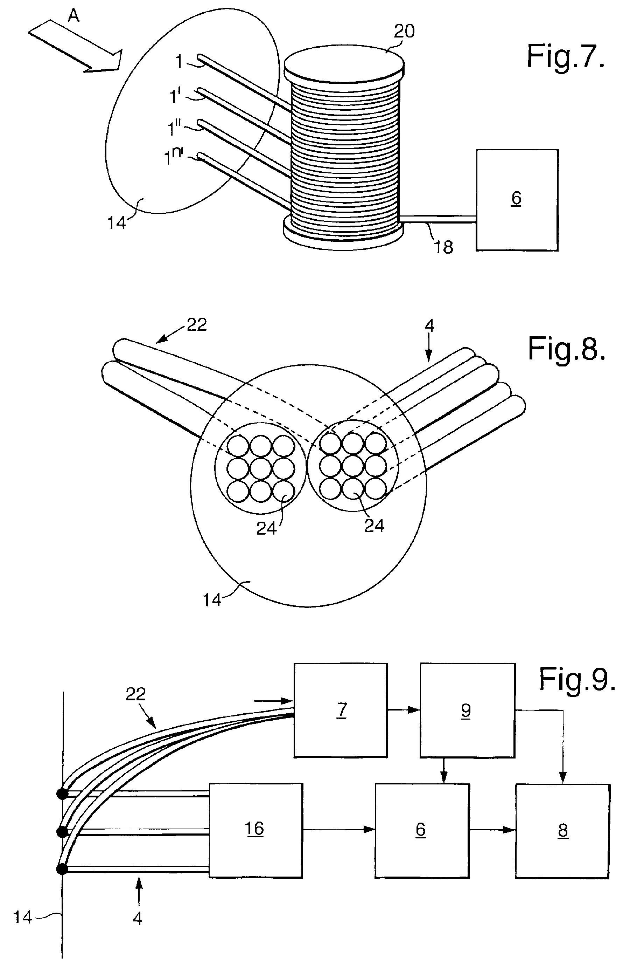

Fig. 7 shows a practical, compact version of the architecture of Fig. 6, showing a coil 20 on which main fiber 18 is wound, as well as parts of the thin, image-plane fibers 1 to 1^{*n'*}.

Another modification of the fiber architecture, namely, the reference probe, can be used to solve additional problems in the multi-pixel imagery.

The former architecture may present difficulties when the image-plane thin fibers are of extremely small diameters (e.g., 10 µm). This is so because of the severe mechanical adjustment needed between the exact fiber position and the image pixel position. The solution to this problem is found in the previously mentioned replacement of each image plane fiber by *n* × *n* thin fibers - the filling factor configuration. If, for example, 3 × 3 = 9, 10 µm replacement fibers are used, the focal length of the imaging means is changed to such an extent that the image pixel is enlarged to a diameter of 30 µm. These fibers are commercial, and the problem of mechanical tolerance is eliminated. Furthermore, the *n* × *n* thin fiber model offers additional advantages and can be used to resolve additional problems and fulfill other functions. One of the *n* × *n* fibers can be used to measure other light properties than does the main fiber bundle. This is accomplished by splitting out one fiber from each *n* × *n* fiber bunch, representing one single fiber from the original thick bundle, forming a parallel sub-bundle 22 and coupling it to an additional detector designed to measure the other specific light property (see Fig. 8, showing main bundle 4, secondary function bundle 22 and *n* × *n* thin fibers 24).

Thus, if main bundle 4 is used to measure the distances to the target pixels using the delay solution according to the present invention, sub-bundle 22 may be used to measure the genuine, undelayed ranges, thus enabling the system to detect the presence of irrelevant, additional obstacles positioned in front of the main target (i.e., birds). Such additional information, when correctly used, will prevent the inclusion of these obstacles in the final target image, thus reducing system false alarms.

Another use of the additional sub-bundle is when it is connected to a light-intensity measuring detector. This application uses sub-bundle 22 as a reference probe to prevent the main detector electronics from being blinded by high-intensity light echoes. The signal from the undelayed sub-bundle 22 arrives at its detector 7 early enough to let main detector electronics 8 reduce its amplification (voltages) automatically to the required value (see Fig. 9).

In principle, the fiber-to-detector coupling should not pose any difficulty, being a conventional coupling that transfers light energy to standard detectors. In spite of this, the fact should be kept in mind that various fiber architectures may require different couplings.

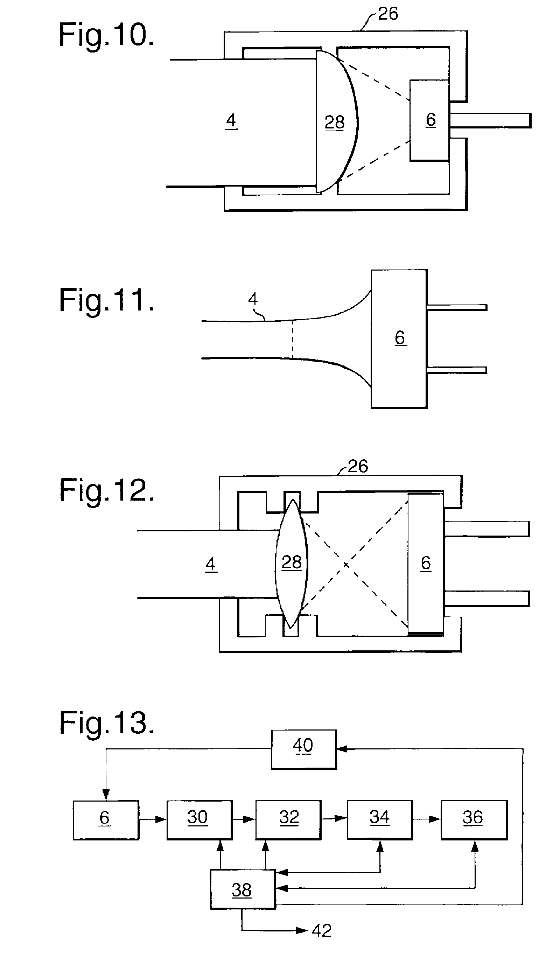

When the direct configuration is used, depending on the number of fibers in the bundle, the total diameter of bundle 4 may be smaller or larger than the detector diameter. For example, a total number of 20 fibers, each of a diameter of 30 µm, results in a bundle diameter of 600 µm = 0.6 mm. A diode of an effective diameter of 2 mm may accept such a bundle directly, without the need for a mediator. When, on the other hand, the fibers are of diameters of 200 µm each, the total bundle diameter will be 4 mm, a value which exceeds the effective diameter of the detector. This requires the use of a mediator, such as that shown in Fig. 10, comprising a mounting 26 accommodating the end of bundle 4, as well as a short focal length lens 28 that concentrates the light from bundle 4 onto detector 6.

The above-mentioned combined fiber architecture ends in the shape of a single main fiber, of a diameter that may be from 100-500 µm. When detector 6 is of a diameter of 0.1-1 mm, it can accept the fiber as is. But in the extreme case of a thin fiber (100 µm) and a large-aperture detector (2-4 mm), in spite of the fact that the direct approach may be adequate, it is advised that the light be diffused over the entire detector aperture, in order not to be dependent on the detector surface homogeneity. In this case, a main fiber may be used that flares at its end to match the detector diameter, as seen in Fig. 11. Alternatively, a mediating lens 28 may be used in an arrangement similar to that of Fig. 10 (see Fig. 12).

By way of example, Fig. 13 represents a detailed block diagram of the electronics associated with the single detector coupled to fiber bundle 4 in an arrangement used to produce range imagery. Seen are detector 6, preamplifier 30, TPG amplifier 32, A/D converter 34, memory 36, decoding and processing unit 38, voltage control unit 40 and range output 42.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A method for multi-pixel imaging of a scene, using a single detector associated with a time-delay arrangement, said method comprising the steps of:
producing an image of at least part of a remote scene in a defined image plane;
receiving said scene as imaged on said image plane and conveying it image pixel by image pixel through a plurality of light-conveying means to a single detector while introducing a time-delay, whereby said image pixels arrive at said single detector in a sequential order, and
using an electronic logic to reconstruct said image from said time-delayed image pixels received by said detector.

2. The method as claimed in claim 1, further comprising the step of providing each of said light-conveying means with a different length, thereby producing said time-delay.

3. A system for multi-pixel imaging of a scene, using a single detector associated with a time-delay arrangement, said system comprising:
imaging means to create an image of a remote scene in a defined image plane;
image-conveying means receiving said image pixel-by-pixel from said image plane, each of said image-conveying means constituting an optical path of different length, introducing time delays;
a single detector for detecting the light pulses produced by said image pixels in a sequential order produced by said time delays, and
an electronic logic fed by said single detector to reconstruct said image.

4. The system as claimed in claim 3, wherein said image-conveying means is a bundle of optical fibers leading from said image plane to said single detector.

5. The system as claimed in claim 3, wherein said single detector is an avalanche photo diode.

6. The system as claimed in claim 4, wherein said bundle of optical fibers is of a configuration requiring two-dimensional scanning.

7. The system as claimed in claim 4, wherein said bundle of optical fibers is of a configuration requiring one-dimensional scanning.

8. The system as claimed in claim 4, wherein said bundle of optical fibers is of the staring, non-scanning type.

9. The system as claimed in claim 7, wherein the image plane and portion of said fiber bundle consist of a single, substantially linear array of fibers.

10. The system as claimed in claim 4, further comprising a mediator optics to mediate between the diameter of said bundle of optical fibers and the diameter of said single detector.

11. The system as claimed in claim 4, further comprising a non-time-delaying sub-bundle of optical fibers, the light-receiving end of which is located in said image plane, and which sub-bundle is used to feed a light-intensity detector.

12. A method for multi-pixel imaging of a scene according to claim 1, substantially as hereinbefore described and with reference to the accompanying drawings.

13. A system for multi-pixel imaging of a scene according to claim 3, substantially as hereinbefore described and with reference to the accompanying drawings.
